# EUROPÄISCHE PATENTSCHRIFT

(11) **EP 1 159 174 B1**
(45) Veröffentlichungstag und Bekanntmachung des Hinweises auf die Patenterteilung: **14.05.2003**
(21) Anmeldenummer: 00910813.5
(22) Anmeldetag: 10.03.2000
(51) Int. Cl.: B60T 8/00

(54) **FAHRZEUGSTABILITÄTSREGELSYSTEM**
SYSTEM FOR REGULATING THE STABILITY OF A MOTOR VEHICLE
SYSTEME DE REGULATION DE LA STABILITE DU VEHICULE

(30) Priorität: 11.03.1999 DE 19910868
(43) Veröffentlichungstag der Anmeldung: 05.12.2001
(73) Patentinhaber: Lucas Varity GmbH, 56070 Koblenz (DE)
(72) Erfinder: BÜSTGENS, Burkhard, D-56564 Neuwied (DE); BESTMANN, Harald, D-56377 Nassau (DE)
(74) Vertreter: Schmidt, Steffen J., Dipl.-Ing.
(86) Internationale Anmeldenummer: EP0002148
(87) Internationale Veröffentlichungsnummer: WO00053472

(56) Entgegenhaltungen:
- DE-A- 4 228 893
- DE-A- 4 340 719
- US-A- 5 274 576
- US-A- 5 719 790

## Beschreibung

### Hintergrund der Erfindung

Die vorliegende Erfindung betrifft ein Fahrzeugstabilitätsregelsystem für Landfahrzeuge, mit einem Gierratensensor, der im Betrieb ein für die Gierrate des Fahrzeuges repräsentatives erstes Ausgangssignal liefert. Mit derartigen Giersensoren wird die Gierrate als Maß für das dynamische Verhalten des Fahrzeuges ermittelt und zur Erzeugung eines Eingriffs-Signals durch eine elektronische Steuereinheit herangezogen.

### Stand der Technik

Es besteht nun bei bekannten Anordnungen das Problem, daß vor allem während der Aufwärmphase das Ausgangssignal des Drehratensensors eine sehr starke Null-Lage-Drift bedingt durch Temperaturschwankungen aufweist. Zur Vermeidung von durch die Null-Lage-Drift verursachten Fehlregelungen wird in der EP 0 893 320 A2 eine Fahrzeugregelvorrichtung vorgeschlagen, gemäß der dann, wenn die Abweichung zwischen der mittels des Drehratensensors erfaßten Gierrate und einer aus der Fahrzeuggeschwindigkeit und dem Lenkwinkel geschätzten Gierrate einen Schwellwert übersteigt, wenigstens ein Rad abgebremst wird, um zur Verringerung der Gierratenabweichung ein Giermoment im Fahrzeugaufbau zu erzeugen, wobei die Fahrzeugregelvorrichtung den Schwellwert zeitweilig erhöht, bis der Drehratensensor aufgewärmt ist.

Die aus der EP 0 893 320 A2 bekannte Fahrzeugregeleinrichtung hat den Nachteil, daß sicherheitskritische Fahrzustände nicht vollkommen ausgeschlossen werden könne, da ein automatischer Bremseneingriff zur Verringerung der Gierratenabweichung ausgelöst wird. Als Auslösekriterium für den automatischen Bremseneingriff wird hier eine lediglich geschätzte Gierrate mit herangezogen, die zwangsläufig keine besonders zuverlässige Größe darstellt. Ein weiterer Nachteil ist, daß die Leistungsfähigkeit der Fahrzeugregeleinrichtung in einem nicht unerheblichen Maße eingeschränkt wird, weil während der Aufwärmphase der Schwellwert erhöht wird, wodurch das Ansprechverhalten träger wird. Des weiteren werden bei dieser bekannten Fahrzeugregeleinrichtung im Betrieb auftretende Temperaturschwankungen nicht berücksichtigt.

In der DE 43 40 719 A1 ist eine Schaltungsanordnung zum Auswerten der Signale eines Giergeschwindigkeitssensors offenbart, bei der die Temperaturabhängigkeit der Signale des Giergeschwindigkeitssensors unter Verwendung eines zusätzlichen Temperatursensors kompensiert wird. Hierfür wird mit dem Temperatursensor die Temperatur des Giergeschwindigkeitssensors erfaßt und für jede ermittelte Temperatur ein Korrekturfaktor für die Signale des Giergeschwindigkeitssensors ermittelt und abgespeichert. Da einerseits der Temperatursensor eine temperaturabhängige Charakteristik aufweisen kann und andererseits der Zusammenhang zwischen einer ermittelten Temperatur des Giergeschwindigkeitssensors und der temperaturabhängigen Veränderung eines entsprechenden Signales des Giergeschwindigkeitssensors variieren kann, kann eine zuverlässige Kompensation von temperaturabhängigen Veränderungen der Signale des Giergeschwindigkeitssensors nicht gewährleistet werden. Ferner benötigt diese Schaltungsanordnung einen zusätzlichen Sensor, nämlich den Temperatursensor.

### Der Erfindung zugrundeliegendes Problem

Deshalb liegt der Erfindung die Aufgabe zugrunde, ein Verfahren zum Kompensieren der Null-Lage-Drift eines Drehratensensors zu schaffen, das weder auf die Sicherheit noch auf die Leistungsfähigkeit nachteilige Auswirkungen hat.

### Erfindungsgemäße Lösung

Zur Lösung dieses Problems schlägt die Erfindung eine Vorrichtung gemäß Anspruch 1 sowie ein Verfahren gemäß Anspruch 6 vor.

Der Erfindung liegt dabei die Erkenntnis zugrunde, daß Gierratensensoren sehr stark temperaturabhängige Ausgangssignale liefern. Da die Drehratensensoren üblicherweise im Fahrgastraum oder im Motorraum des Fahrzeugs untergebracht werden, sind sie besonders starken Temperaturschwankungen ausgesetzt. Diese können in einer Größenordnung von 60°C liegen, wenn der Drehratensensor während Fahrzeugstillstandzeiten im Winter extrem niedrige bzw. im Sommer extrem hohe Temperaturen annimmt, die im Fahrzeugbetrieb durch die Heizungs- bzw. die Klimaanlage wieder auf Raumtemperatur erhöht bzw. reduziert werden. Insofern ist das erfindungsgemäße Verfahren hier bevorzugt anzuwenden.

Es versteht sich aber auch, daß die Weise der im Rahmen der Erfindung erlangten Kenntnis über die Temperatur auch für andere Anwendungen im Fahrzeug genutzt werden kann, beispielsweise zur Steuerung der Heizungs- bzw. Klimaanlage. Besonders einfach sind solche Anwendungen dann möglich, wenn über ein Bussystem im Fahrzeug, z.B. CAN-Bus, auf das Schwingfrequenz-Ausgangssignal des Drehratensensors zugegriffen werden kann.

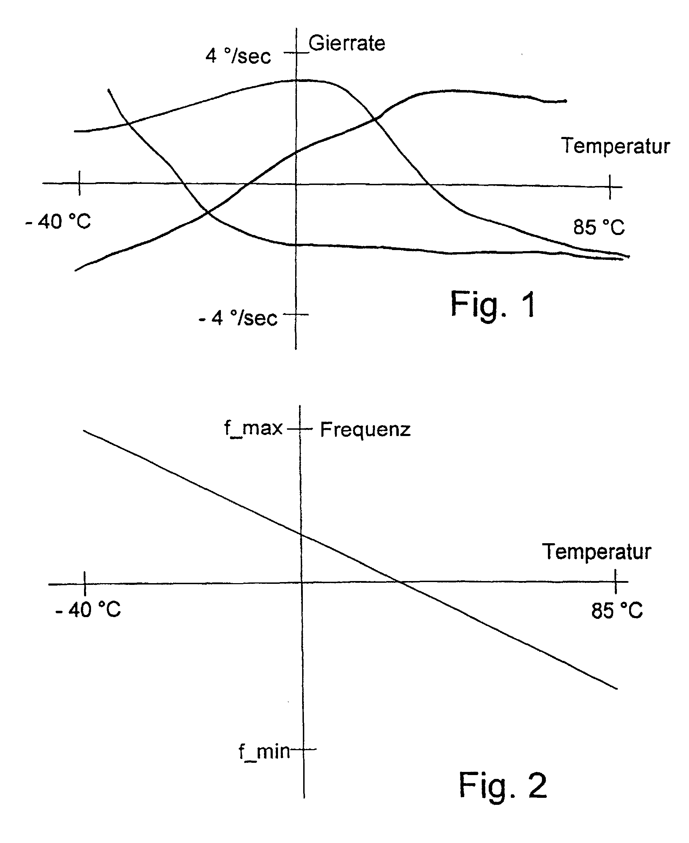

Der Gierratensensor liefert ein (erstes) Ausgangssignal, das eine momentane Gierrate des Fahrzeuges, verfälscht durch die Betriebs- oder Umgebungstemperatur des Gierratensensors wiedergibt. Das Problem ist hierbei, daß die Temperaturabhängigkeiten der Ausgangssignale sogar für unterschiedliche Gierratensensoren der gleichen Bauart und Baureihe stark voneinander abweichen können (siehe Fig. 1), so daß eine festeingestellte (programmierte oder festverdrahtete) Logik zur Temperaturkompensation üblicherweise versagt. Außerdem können alterungsbedingte Schwankungen auf diese Weise auch nicht ausgeglichen werden. Des weiteren liefert der Gierratensensor ein (zweites) Ausgangssignal, das ein (Frequenz- oder Spannungs-)Signal ist, das eigentlich konstant wäre, aber ebenfalls durch die Betriebs- oder Umgebungstemperatur gemäß einer bekannten Gesetzmäßigkeit, vorzugsweise linear verändert ist (siehe Fig. 2).

Im übrigen sind in modernen Fahrzeugen mit ABS, ASR etc. eine Reihe von Sensoren vorhanden, die Ausgangssignale liefern, welche zwar zur Ermittlung der Gierrate herangezogen werden könnten (Lenkwinkelsensor, Rad-Drehzahlsensoren etc.). Allerdings sind diese Ausgangssignale nur für eine sehr grobe Schätzung oder Ermittlung von von Null abweichenden Gierraten geeignet. Um zu erkennen, daß eine Gierrate von Null oder praktisch Null (innerhalb eines vorbestimmten Toleranzbandes) vorliegt, können die Ausgangssignale derartiger Sensoren jedoch mit sehr guten und zuverlässigen Ergebnissen herangezogen werden.

Diese Erkenntnisse macht sich die Erfindung zu nutze.
Das Steuerprogramm für die Rechnereinheit unterscheidet einen Lernmodus und einen Betriebsmodus.

Im Lernmodus wird die Gesetzmäßigkeit ermittelt, gemäß der sich der Nullpunkt der durch den Gierratensensor erfaßten Gierrate des Fahrzeuges in Abhängigkeit von der Betriebsoder Umgebungstemperatur verschiebt. Dazu wird für unterschiedliche auftretende Betriebs- oder Umgebungstemperaturen des Gierratensensors, wie sie aus dem zweiten Ausgangssignal bestimmt werden können, dann die momentane Gierrate bestimmt, wenn dem Ausgangssignal des weiteren Sensors (zum Beispiel den Raddrehzahlsensoren oder dem Lenkwinkelsensor oder der Tatsache, daß der Automatik-Gangwahlhebel auf "Parken" steht) entnommen werden kann, daß die Gierrate des Fahrzeuges Null oder praktisch Null ist.

Die so bestimmte (aufgrund des Temperatureinflusses) von Null abweichende Gierrate wird als Nullpunkt-Versatz-Wert in Abhängigkeit von der jeweiligen Betriebs- oder Umgebungstemperatur des Gierratensensors in eine Tabelle eingetragen, die als sog. Lookup-Tabelle in dem Datenspeicher geführt ist. Dabei dient die jeweilige Betriebs- oder Umgebungstemperatur des Gierratensensors als Adressierkriterium der Lookup-Tabelle.

Während des.8etriebsmodus wird dann die durch den Gierratensensor erfaßte Gierrate des Fahrzeuges mit einem Nullpunkt-Versatz-Wert korrigiert, der in Abhängigkeit von der jeweiligen Betriebs- oder Umgebungstemperatur des Gierratensensors (entsprechend dem zweiten Ausgangssignal) aus der Tabelle ausgelesen wird. Der so korrigierte Wert dient als Grundlage für ein Ansteuersignal für einen Eingriff in das Fahrverhalten des Fahrzeuges, zum Beispiel für eine selektive Betätigung einer oder mehrerer Radbremsen, Begrenzung oder Reduzierung der Drosselklappenstellung, Ausklappen eines Stützrades oder dergl.

### Vorteilhafte Weiterbildungen

In einer bevorzugten Ausführungsform sind der Gierratensensor durch einen mikromechanischen Schwingungsgyrometer, und/oder die weitere Sensoranordnung durch die Rad-Drehzahlsensoren für die ABS/ASR-Bremsanlage, einen Lenkeinschlagwinkelsensor oder dergl., und/oder der beschreibbare Datenspeicher durch einen nicht-flüchtigen Schreib/Lesespeicher gebildet.

Im Lernmodus wird vorzugsweise durch Ermittlung eines Gradienten von benachbarten temperaturbezogenen Nullpunkt-Versatz-Werten und Vergleich eines aktuellen Nullpunkt-Versatz-Wertes mit dem sich aus dem Gradientenverlauf ergebenden theoretischen Wert der aktuelle Nullpunkt-Versatz-Wert vor dem Einschreiben in den Datenspeicher auf Plausibilität geprüft.

Im Lernmodus können außerdem durch Interpolieren von zwischen bereits ermittelten Nullpunkt-Versatz-Werten im Datenbestand fehlende Nullpunkt-Versatz-Werte ergänzt werden.

Außerdem können im Lernmodus durch Vergleichen eines bereits ermittelten Nullpunkt-Versatz-Wertes mit einem aktuellen Nullpunkt-Versatz-Wert für den gleichen oder nahezu gleichen Temperaturwert, und Ersetzen des bereits ermittelten Nullpunkt-Versatz-Wertes durch einem aktuellen Nullpunkt-Versatz-Wert im Datenspeicher falls diese voneinander abweichen alterungsbedingte Nullpunkt-Versetzungen ausgeglichen werden.

Im Lernmodus kann ein erster temperaturbezogener Nullpunkt-Versatz-Wert bei der Endmontage bei stillstehendem Fahrzeug und vorbestimmter Umgebungstemperatur in den Datenspeicher eingeschrieben werden.

Im Betriebsmodus wird vorzugsweise das erste Ausgangssignal mit einem Nullpunkt-Versatz-Wert korrigiert, der in Abhängigkeit von dem jeweiligen zweiten Ausgangssignal aus dem Datenspeicher ausgelesen wird.

Bevorzugt ist das zweite Ausgangssignal die Schwingfrequenz des Gierratensensors, da die Schwingfrequenz des Gierratensensors (GRS) mit der Betriebs- oder Umgebungstemperatur des Gierratensensors (GRS) korreliert ist. Dies erlaubt eine verzögerungsfreie und direkte Kompensation des Nullpunkt-Versatzes.

### Kurze Beschreibung der Zeichnungen

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert. Dazu zeigen
- Fig. 1: eine schematische Darstellung von Kurvenverläufen der Nullpunkt-Versatz-Werte dreier Gierratensensoren in Abhängigkeit von der Temperatur;
- Fig. 2: eine schematische Darstellung des Kurvenverlaufs des zweiten Ausgangssignals des Gierratensensors in Abhängigkeit von der Temperatur; und
- Fig. 3: ein schematisches Blockschaltbild einer erfindungsgemäßen Fahrzeugstabilitätsregelsystems.

### Detaillierte Beschreibung der Ausführungsformen

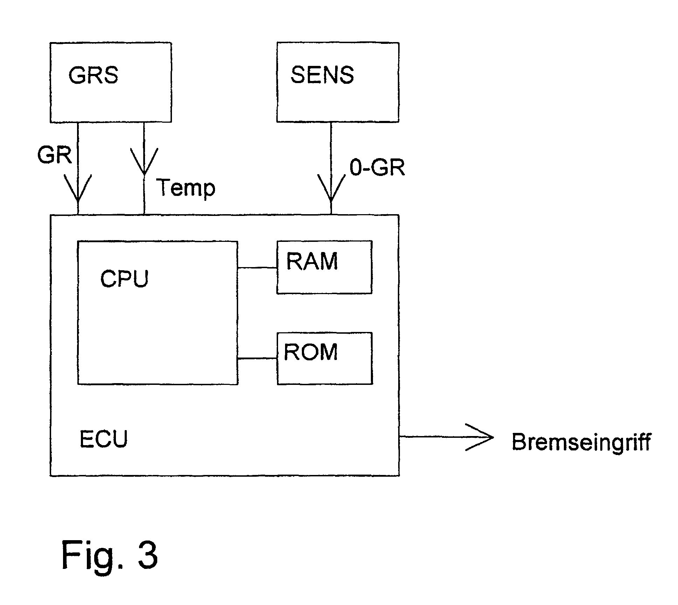

Fig. 3 zeigt ein Fahrzeugstabilitätsregelsystem für Landfahrzeuge, insbesondere Kraftfahrzeuge. Das Fahrzeugstabilitätsregelsystem hat eine eine elektronische Steuereinheit ECU, die eine Rechnereinheit CPU und wenigstens einen beschreibbaren Datenspeicher RAM und einen Steuerprogrammspeicher ROM aufweist, die mit der Rechnereinheit CPU verbunden sind. Mit der elektronischen Steuereinheit ECU ist ein Gierratensensor GRS in Form eines mikromechanischen Schwingungsgyrometer verbunden, der im Betrieb ein für die Gierrate des Fahrzeuges repräsentatives erstes Ausgangssignal GR liefert und ein für die Betriebs- oder Umgebungstemperatur des Gierratensensors GRS repräsentatives zweites Ausgangssignal Temp liefert. Die beiden Ausgangssignale GR und Temp werden in die elektronische Steuereinheit ECU eingespeist, wo sie durch die Rechnereinheit CPU mittels eines in dem Programmspeicher ROM abgelegten Programms verarbeitet werden.

Es versteht sich, daß die beiden Speicher RAM, ROM auch nichtflüchtige, batteriegepufferte FLASH-RAMs oder EEPROMs sein können.

Des weiteren wird in die elektronische Steuereinheit ECU ein Ausgangssignal O-GR einer weiteren Sensoranordnung SENS eingespeist, die ein Nicht-Gieren des Fahrzeuges zumindest innerhalb eines vorbestimmten Toleranzbandes repräsentieren. Diese Sensoranordnung SENS können die Rad-Drehzahlsensoren für die ABS/ASR-Bremsanlage, ein Lenkeinschlagwinkelsensor oder dergl. zur Geradeausfahrt- oder Fahrzeugstillstandserkennung sein. Ggf. ist es erforderlich, die von den jeweiligen Sensoren gelieferten Signale durch geeignete Verarbeitung oder Verknüpfung dahingehend auszuwerten, daß ein definitives "Nicht-Gieren" des Fahrzeuges sicher wiedergegeben und erkennbar ist.

Die elektronische Steuereinheit ECU erzeugt in der nachstehend beschriebenen Weise ein Ansteuersignal für einen automatischen Bremseingriff um so das Fahrverhalten des Fahrzeuges zu beeinflussen.

Das Steuerprogramm für die Rechnereinheit CPU ist in einen Lernmodus und einen Betriebsmodus unterteilt.

In dem Lernmodus errechnet die Rechnereinheit CPU bei Vorliegen des Ausgangssignals O-GR des weiteren Sensors SENS, das anzeigt, daß das Kraftfahrzeug derzeit sich nicht um seine Hoch-Achse dreht (giert), aus dem ersten Ausgangssignal einen temperaturbezogenen Nullpunkt-Versatz-Wert in Abhängigkeit von dem zweiten Ausgangssignal Temp. Der so bestimmte Nullpunkt-Versatz-Wert wird mit dem jeweiligen Temperaturwert als Adress-Index in dem Datenspeicher RAM ablegt. Diese Vorgehensweise wird immer wieder dann wiederholt, wenn das Kraftfahrzeug nicht giert und auch eine Betriebs- oder Umgebungstemperaturen des Gierratensensors vorliegt, für die noch kein Nullpunkt-Versatz-Wert bestimmt wurde.

Im Lernmodus wird außerdem durch Ermittlung eines Gradienten von benachbarten temperaturbezogenen Nullpunkt-Versatz-Werten und Vergleich eines aktuellen Nullpunkt-Versatz-Wertes mit dem sich aus dem Gradientenverlauf ergebenden theoretischen Wert der aktuelle Nullpunkt-Versatz-Wert vor dem Einschreiben in den Datenspeicher auf Plausibilität geprüft.

Sofern bestimmte für Betriebs- oder Umgebungstemperaturen des Gierratensensors kein Nullpunkt-Versatz-Wert in dem Datenspeicher vorliegt, können durch Interpolieren von zwischen bereits ermittelten Nullpunkt-Versatz-Werten im Datenbestand fehlende Nullpunkt-Versatz-Werte ergänzt werden.

Durch Vergleichen eines bereits ermittelten Nullpunkt-Versatz-Wertes mit einem aktuellen Nullpunkt-Versatz-Wert für den gleichen oder nahezu gleichen Temperaturwert, und Ersetzen des bereits ermittelten Nullpunkt-Versatz-Wertes durch einem aktuellen Nullpunkt-Versatz-Wert im Datenspeicher werden alterungsbedingte Nullpunkt-Versetzungen ausgeglichen.

Ein erster temperaturbezogener Nullpunkt-Versatz-Wert wird bei der Endmontage bei stillstehendem Fahrzug und vorbestimmter Umgebungstemperatur in den Datenspeicher eingeschrieben.

In dem Betriebsmodus liest die Rechnereinheit aus dem Datenspeicher unter Berücksichtung des zweiten Ausgangssignals einen temperaturbezogenen Nullpunkt-Versatz-Wert aus und subtrahiert diesen von dem aktuellen ersten Ausgangssignal um ein Bremsanlagen-Ansteuersignal für einen Eingriff in das Fahrverhalten des Fahrzeuges zu erzeugen.

## Patentansprüche

1. Vorrichtung zur Fahrzeugstabilitätsregelung für Landfahrzeuge, umfassend:
- eine elektronische Steuereinheit (ECU) zum Empfang eines ersten, eines zweiten und eines dritten Ausgangssignales (GR, Temp, 0-GR),
- einen Gierratensensor (GRS) zur Ausgabe des ersten Ausgangssignales (GR), das eine Gierrate des Fahrzeugs repräsentiert, wobei das zweite Ausgangssignal (Temp) die Betriebsoder Umgebungstemperatur des Gierratensensors repräsentiert, und
- eine Sensoranordnung (SENS) zur Ausgabe des dritten Ausgangssignales (0-GR), daß ein Nicht-Gieren des Fahrzeugs repräsentiert, wobei die elektronische Steuereinheit
-- in einem Lernmodus einen temperaturbezogenen Nullpunkt-Versatz-Wert in Abhängigkeit des zweiten Ausgangssignales aus dem ersten Ausgangssignal ermittelt und in einem Datenspeicher (RAM) ablegt, wenn das dritte Ausgangssignal ein Nicht-Gieren des Fahrzeugs angibt,
-- in einem Betriebsmodus in Abhängigkeit des zweiten Ausgangssignales einen temperaturbezogenen Nullpunkt-Versatz-Wert aus dem Datenspeicher ausliest und das erste Ausgangssignal mit
demselben korrigiert, um ein Steuersignal zum Steuern des Fahrverhaltens des Fahrzeugs zu erzeugen,
**dadurch gekennzeichnet, daß**
- das zweite Ausgangssignal ein gemäß einer bekannten Gesetzmäßigkeit durch die Betriebs- oder Umgebungstemperatur verändertes Frequenz- oder Spannungssignal des Gierratensensors ist.

2. Vorrichtung nach Anspruch 1,
**dadurch gekennzeichnet, daß**
- das zweite Ausgangssignal die mit der Betriebs- oder Umgebungstemperatur des Gierratensensors korrelierte Schwingfrequenz des Gierratensensors ist.

3. Vorrichtung nach Anspruch 1 oder 2,
**dadurch gekennzeichnet, daß**
- die elektronische Steuereinheit den ermittelten Nullpunkt-Versatz-Wert in dem Datenspeicher speichert, wenn ein Vergleich des ermittelten Nullpunkt-Versatz-Werts mit einem theoretischen Nullpunkt-Versatz-Wert, der sich aus einem Gradienten von benachbarten, in dem Datenspeicher gespeicherten temperaturbezogenen Nullpunkt-Versatz-Werten ergibt, zur Plausibilitätsprüfung des ermittelten Nullpunkt-Versatz-Wertes erfolgreich abgeschlossen ist.

4. Vorrichtung nach einem der Ansprüche 1 bis 3,
**dadurch gekennzeichnet, daß**
- die elektronische Steuereinheit in dem Datenspeicher fehlende Nullpunkt-Versatz-Werte durch Interpolation von zwischen bereits in dem Datenspeicher gespeicherteh Nullpunkt-Versatz-Werten ergänzt.

5. Vorrichtung nach einem der Ansprüche 1 bis 4,
**dadurch gekennzeichnet, daß**
- der Datenspeicher einen ersten temperaturbezogenen Nullpunkt-Versatz-Wert enthält, der einen Nullpunkt-Versatz-Wert bei der Endmontage bei stillstehendem Fahrzeug und vorbestimmter Betriebs- und Umgebungstemperatur des Gierratensensors repräsentiert.

6. Verfahren zum Fahrzeugstabilitätsregeln für Landfahrzeuge, die Schritte umfassen:
- Ausgeben eines ersten Ausgangssignales (GR) mittels eines Gierratensensors (GRS), das eine Gierrate des Fahrzeugs repräsentiert,
- Ausgeben eines zweiten Ausgangssignales (Temp), das eine Betriebs- oder Umgebungstemperatur des Gierratensensors repräsentiert,
- Ausgeben eines dritten Ausgangssignales (0-GR) mittels einer Sensoranordnung (SENS), das ein Nicht-Gieren des Fahrzeugs repräsentiert,
- Erfassen des ersten, des zweiten und des dritten Ausgangssignales mittels einer elektronischen Steuereinheit (ECU),
- in einem Lernmodus Ermitteln eines temperaturbezogenen Nullpunkt-Versatz-Wertes in Abhängigkeit von dem zweiten Ausgangssignal aus dem ersten Ausgangssignal und Speichern des temperaturbezogenen Nullpunkt-Versatz-Wertes in einem Datenspeicher (RAM), wenn das dritte Ausgangssignal ein Nicht-Gieren des Fahrzeugs angibt, und
- in einem Betriebsmodus Auslesen eines temperaturbezogenen Nullpunkt-Versatz-Wertes aus dem Datenspeicher unter Berücksichtigung des zweiten Ausgangssignales und Korrigieren des ersten Ausgangssignales mit dem ausgelesenen Nullpunkt-Versatz-Wert, um ein Steuersignal zum Steuern des Fahrverhaltens des Fahrzeuges zu erzeugen,
**dadurch gekennzeichnet, daß**
- als zweites Ausgangssignal ein gemäß einer bekannten Gesetzmäßigkeit durch die Betriebs- oder Umgebungstemperatur verändertes Frequenz- oder Spannungssignal von dem Gierratensensor ausgegeben wird.

7. Verfahren nach Anspruch 6,
**dadurch gekennzeichnet, daß**
- das zweite Ausgangssignal als Schwingfrequenz des Gierratensensors ausgegeben wird, wobei die Schwingfrequenz mit der Betriebs- oder Umgebungstemperatur des Gierratensensors korreliert ist.

8. Verfahren nach Anspruch 6 oder 7,
**dadurch gekennzeichnet, daß**
das Speichern des ermittelten Nullpunkt-Versatz-Wertes die Schritte umfaßt:
- Ermitteln eines Gradienten von benachbarten, in dem Datenspeicher gespeicherten temperaturbezogenen Nullpunkt-Versatz-Werten,
- Vergleichen des ermittelten Nullpunkt-Versatz-Wertes mit einem theoretischen Nullpunkt-Versatz-Wert, der sich aus dem ermittelten Gradienten ergibt, zur Plausibilitätsprüfung des ermittelten Nullpunkt-Versatz-Wertes, und
- Speichern des ermittelten Nullpunkt-Versatz-Wertes, wenn die Plausibilitätsprüfung erfolgreich abgeschlossen wurde.

9. Verfahren nach einem der Ansprüche 6 bis 8,
**dadurch gekennzeichnet, daß**
das Ermitteln temperaturbezogener Nullpunkt-Versatz-Werte in dem Lernmodus die Schritte umfaßt:
- Interpolieren zwischen in dem Datenspeicher gespeicherten Nullpunkt-Versatz-Werten, und
- Speichern von in dem Datenspeicher fehlenden Nullpunkt-Versatz-Werten durch das Interpolieren ermittelte Nullpunkt-Versatz-Werte.

10. Verfahren nach einem der Ansprüche 6 bis 9,
**dadurch gekennzeichnet, daß** das Ermitteln der Nullpunkt-Versatz-Werte in dem Lernmodus die Schritte umfaßt:
- Ermitteln eines ersten temperaturbezogenen Nullpunkt-Versatz-Wertes bei der Endmontage bei stillstehendem Fahrzeug und vorbestimmter Betriebs- oder Umgebungstemperatur des Gierratensensors, und
- Speichern des ersten temperaturbezogenen Nullpunkt-Versatz-Wertes in dem Datenspeicher.

## Claims

1. Device for regulating the stability of vehicles for land vehicles, comprising:
- an electronic control unit (ECU) for receiving a first, a second and a third output signal (GR, Temp, O-GR),
- a yaw rate sensor (GRS) for delivering the first output signal (GR), which represents a yaw rate of the vehicle,
wherein the second output signal (Temp) represents the operating or ambient temperature of the yaw rate sensor, and
- a sensor arrangement (SENS) for delivering the third output signal (O-GR), which represents a non-yawing state of the vehicle, wherein the electronic control unit
-- in a learning mode determines a temperature-related zero offset value from the first output signal in accordance with the second output signal and stores it in a data memory (RAM) if the third output signal indicates a non-yawing state of the vehicle,
-- in an operating mode reads a temperature-related zero offset value out of the data memory in accordance with the second output signal and corrects the first output signal with this zero offset value in order to generate a control signal for controlling the road behaviour of the vehicle,
**characterised in that**
- the second output signal is a frequency or voltage signal of the yaw rate sensor varied by the operating or ambient temperature according to a known regularity.

2. Device according to Claim 1,
**characterised in that**
- the second output signal is the oscillation frequency of the yaw rate sensor which is correlated with the operating or ambient temperature of the yaw rate sensor.

3. Device according to Claim 1 or 2,
**characterised in that**
- the electronic control unit stores the determined zero offset value in the data memory if a comparison of the determined zero offset value with a theoretical zero offset value resulting from a gradient of adjacent temperature-related zero offset values stored in the data memory for checking the plausibility of the determined zero offset value has been successfully concluded.

4. Device according to any one of Claims 1 to 3,
**characterised in that**
- the electronic control unit adds zero offset values missing from the data memory by interpolating between zero offset values already stored in the data memory.

5. Device according to any one of Claims 1 to 4,
**characterised in that**
- the data memory contains a first temperature-related zero offset value which represents a zero offset value at the final assembly stage with the vehicle at a standstill and a predetermined operating and ambient temperature of the yaw rate sensor.

6. Method for regulating the stability of vehicles for land vehicles, comprising the following steps:
- delivering a first output signal (GR) by means of a yaw rate sensor (GRS) which represents a yaw rate of the vehicle,
- delivering a second output signal (Temp) which represents an operating or ambient temperature of the yaw rate sensor,
- delivering a third output signal (O-GR) by means of a sensor arrangement (SENS) which represents a non-yawing state of the vehicle,
- detecting the first, the second and the third output signal by means of an electronic control unit (ECU),
- in a learning mode determining a temperature-related zero offset value from the first output signal in accordance with the second output signal and storing the temperature-related zero offset value in a data memory (RAM) if the third output signal indicates a non-yawing state of the vehicle, and
- in an operating mode reading a temperature-related zero offset value out of the data memory, taking account of the second output signal, and correcting the first output signal with the zero offset value which is read out in order to generate a control signal for controlling the road behaviour of the vehicle,
**characterised in that**
- a frequency or voltage signal varied by the operating or ambient temperature according to a known regularity is delivered by the yaw rate sensor as second output signal.

7. Method according to Claim 6,
**characterised in that**
- the second output signal is delivered as the oscillation frequency of the yaw rate sensor, wherein the oscillation frequency is correlated with the operating or ambient temperature of the yaw rate sensor.

8. Method according to Claim 6 or 7,
**characterised in that**
- the storage of the determined zero offset value comprises the following steps:
- determining a gradient of adjacent temperature-related zero offset values stored in the data memory,
- comparing the determined zero offset value with a theoretical zero offset value resulting from the determined gradient in order to check the plausibility of the determined zero offset value, and
- storing the determined zero offset value if the plausibility check has been successfully concluded.

9. Method according to one Claims 6 to 8,
**characterised in that**
the determination of temperature-related zero offset values in the learning mode comprises the following steps:
- interpolating between zero offset values stored in the data memory, and
- storing zero offset values missing from the data memory by interpolating determined zero offset values.

10. Method according to one Claims 6 to 9,
**characterised in that** the determination of the zero offset values in the learning mode comprises the following steps:
- determining a first temperature-related zero offset value at the final assembly stage with the vehicle at a standstill and a predetermined operating or ambient temperature of the yaw rate sensor, and
- storing the first temperature-related zero offset value in the data memory.

## Revendications

1. Dispositif de régulation de la stabilité d'un véhicule pour des véhicules terrestres, comprenant :
- un module de commande électronique (ECU) destiné à la réception d'un premier, d'un deuxième et d'un troisième signal de sortie (GR, Temp, 0-GR),
- un capteur de coefficient d'embardée (GRS) destiné à délivrer le premier signal de sortie (GR) qui représente un coefficient d'embardée du véhicule, le deuxième signal de sortie (Temp) représentant la température en service ou la température ambiante autour du capteur de coefficient d'embardée et
- un dispositif de capteur (SENS) destiné à délivrer le troisième signal de sortie (0-GR) qui représente une absence d'embardée du véhicule, le module de commande électronique
- - déterminant dans un mode d'apprentissage une valeur de déplacement de zéro par rapport à la température en fonction du deuxième signal de sortie à partir du premier signal de sortie et l'enregistrant dans une mémoire de données (RAM) si le troisième signal de sortie indique une absence d'embardée du véhicule,
- - lisant dans la mémoire de données dans un mode en service en fonction du deuxième signal de sortie une valeur de déplacement de zéro par rapport à la température et corrigeant avec celle-ci le premier signal de sortie pour générer un signal de commande pour commander le comportement de conduite du véhicule,
**caractérisé en ce que**
- le deuxième signal de sortie est un signal de tension ou de fréquence du capteur de coefficient d'embardée modifié, conformément à une loi connue, par la température ambiante ou en service.

2. Dispositif selon la revendication 1,
**caractérisé en ce que**
- le deuxième signal de sortie est la fréquence d'oscillation du capteur de coefficient d'embardée corrélée avec la température ambiante ou en service du capteur de coefficient d'embardée.

3. Dispositif selon la revendication 1 ou 2,
**caractérisé en ce que**
- le module de commande électronique enregistre la valeur de déplacement de zéro déterminée dans la mémoire de données si une comparaison de la valeur de déplacement de zéro déterminée avec une valeur de déplacement de zéro théorique qui résulte d'un gradient de valeurs voisines enregistrées dans la mémoire de données de déplacement de zéro par rapport à la température, pour une vérification de vraisemblance de la valeur de déplacement de zéro déterminée, s'est terminée avec succès.

4. Dispositif selon l'une quelconque des revendications 1 à 3 **caractérisé en ce que**
- le module de commande électronique complète dans la mémoire de données des valeurs de déplacement de zéro manquantes par interpolation entre des valeurs de déplacement de zéro déjà enregistrées dans la mémoire de données.

5. Dispositif selon l'une quelconque des revendications 1 à 4
**caractérisé en ce que**
- la mémoire de données contient une première valeur de déplacement de zéro par rapport à la température qui représente une valeur de déplacement de zéro au moment du montage final, le véhicule étant immobile, et une température ambiante autour du et en service prédéterminée du capteur de coefficient d'embardée.

6. Procédé de régulation de stabilité de véhicule pour des véhicules terrestres comprenant les opérations consistant à :
- délivrer un premier signal de sortie (GR) au moyen d'un capteur de coefficient d'embardée (GRS), qui représente un coefficient d'embardée du véhicule,
- délivrer un deuxième signal de sortie (Temp) qui représente une température ambiante autour du ou en service du capteur de coefficient d'embardée,
- délivrer un troisième signal de sortie (0-GR) au moyen d'un dispositif de capteur (SENS) qui représente une absence d'embardée du véhicule,
- saisir le premier, le deuxième et le troisième signal de sortie au moyen d'un module de commande électronique (ECU),
- dans un mode d'apprentissage, déterminer une valeur de déplacement de zéro par rapport à la température en fonction du deuxième signal de sortie à partir du premier signal de sortie et enregistrer la valeur de déplacement de zéro par rapport à la température dans une mémoire de données (RAM) si le troisième signal de sortie indique une absence d'embardée du véhicule, et
- dans un mode en service lire dans la mémoire de données une valeur de déplacement de zéro par rapport à la température en tenant compte du deuxième signal de sortie et corriger le premier signal de sortie avec la valeur de déplacement de zéro lue, pour générer un signal de commande du comportement de conduite du véhicule,
**caractérisé en ce que**
- comme deuxième signal de sortie, le capteur de coefficient d'embardée délivre un signal de tension ou de fréquence modifié, conformément à une loi connue, par la température ambiante ou en service.

7. Procédé selon la revendication 6,
**caractérisé en ce que**
- le deuxième signal de sortie est délivré sous la forme d'une fréquence d'oscillation du capteur de coefficient d'embardée, la fréquence d'oscillation étant corrélée avec la température ambiante autour du ou en service du capteur de coefficient d'embardée.

8. Procédé selon la revendication 6 ou 7,
**caractérisé en ce que**
l'enregistrement de la valeur de déplacement de zéro déterminée comprend les opérations consistant à :
- déterminer un gradient de déplacements de zéro par rapport à la température voisins enregistrés dans la mémoire de données,
- comparer la valeur de déplacement de zéro déterminée avec une valeur de déplacement de zéro théorique qui résulte du gradient déterminé, pour la vérification de la vraisemblance de la valeur de déplacement de zéro déterminée, et
- enregistrer la valeur de déplacement de zéro déterminée si la vérification de vraisemblance s'est terminée avec succès.

9. Procédé selon l'une quelconque des revendications 6 à 8,
**caractérisé en ce que**
la détermination de valeurs de déplacement de zéro par rapport à la température dans le mode d'apprentissage comprend les opérations consistant à :
- interpoler entre des valeurs de déplacement de zéro enregistrées dans la mémoire de données, et
- enregistrer des valeurs de déplacement de zéro manquantes dans la mémoire de données déterminées par l'interpolation de valeurs de déplacement de zéro déterminées.

10. Procédé selon l'une quelconque des revendications 6 à 9,
**caractérisé en ce que** la détermination des valeurs de déplacement de zéro dans le mode d'apprentissage comprend les opérations consistant à :
- déterminer une première valeur de déplacement de zéro par rapport à la température au moment du montage final, le véhicule étant immobile, et une température ambiante autour du ou en service du capteur de coefficient d'embardée prédéterminée, et
- enregistrer la première valeur de déplacement de zéro par rapport à la température dans la mémoire de données.
